# EUROPEAN PATENT SPECIFICATION

(11) **EP 0 996 220 B1**
(45) Date of publication and mention of the grant of the patent: **02.09.2009**
(21) Application number: 99203446.2
(22) Date of filing: 20.10.1999
(51) Int. Cl.: H02P 1/58, B28D 1/04, B23D 47/12

(54) **Method and device for arranging channels in floors**
Verfahren und Anlage zum Anordnen von Kanälen in Fussböden
Méthode et appareil pour arranger des canaux dans des sols

(30) Priority: 20.10.1998 NL 1010360
(43) Date of publication of application: 26.04.2000
(73) Proprietor: J.K. Beheer B.V., 6716 BR Ede (NL)
(72) Inventor: Janssen, Hendrik Johannes, 6713 KP Ede (NL); Krop, Ronald, 6718 TL Ede (NL)
(74) Representative: Ketelaars, Maarten F.J.M.

(56) References cited:
- NL-A- 9 401 812
- US-A- 1 556 013
- US-A- 2 440 033
- US-A- 3 317 802

## Description

The present invention relates to a device for arranging one or more channels in a surface, for instance for the purpose of arranging floor heating.

Grinding machines are known, for instance from NL 9 401 812, for arranging channels in a surface such as concrete floor, a tile floor, a floor which is hard due to the composition thereof and the like, this with the objective of laying therein liquid conduits for heating and/or cooling, which machines are compact and easily manoeuvrable and which can make use of the existing energy supply infrastructure, such as the mains electricity supply present in homes and offices.

This known device is however unsuitable for arranging channels in a very hard surface, inter alia because of the limited available power of the drive motor.

In order to transmit more power to the surface it has been found impossible in practice, owing to the limitations of the existing energy supply infrastructure or the domestic power supply, to provide the known device with a heavier motor with more power since a heavier motor overloads and in some cases damages the energy supply when switched on due to the high switch-on peak currents which occur. The dimensions of a heavier motor are moreover such that it cannot be built into the known device if the handling and manoeuvrability of the device are to be preserved. It has been found in tests for instance that a single motor of 5 kW capacity and a rotation speed of 8500 revolutions per minute cannot be fitted into the known device.

It is an object of the present invention to provide a device which is suitable for arranging channels in a very hard surface but which is nonetheless compact, easy to handle and to manoeuvre.

It is also an object of the invention to provide a method for arranging channels in a floor having a very hard surface.

It is a further object of the invention to provide a device and method wherein use can be made of the existing energy supply infrastructure, for instance the domestic power supply.

At least one of the objects of the invention is achieved in a device as claimed in present claim 1 and at least one of the objects is also achieved in a method as claimed in present claim 21.

The power to be transmitted onto the surface can be considerably increased by using two drive motors. By moreover switching on the first motor at a first point in time and switching on the second motor at a second point in time the switch-on peak load on the energy supply infrastructure is reduced when compared with the use of one motor of comparable power. It hereby becomes possible to use the existing energy supply infrastructure to arrange channels in a very hard surface. An advantage of the present invention is moreover that the use of two relatively small drive motors provides a high-power device which has compact dimensions.

In order to obtain very easy handling and in particular high manoeuvrability of the device, for instance to make possible a bend with a radius of about 9 cm, the device must have minimal dimensions in width direction. In a preferred embodiment of the invention the first and second drive motor are therefore arranged one above the other.

In another preferred embodiment of the invention the device comprises starting power supply switching means for adjusting the power supply of the first and/or second drive motor from a first power supply value to a second power supply value, wherein the second power supply value is greater than the first power supply value. Switching on the first and/or second drive motor at a first supply voltage value and gradually increasing this supply voltage value over a time interval to a second supply voltage decreases switch-on peak loads on the energy supply caused by switch-on peaks of the first and/or second drive motor.

In a further preferred embodiment of the invention the control circuit comprises a three-position switch, wherein in the first position both drive motors are switched off, in the second position the first drive motor is switched on and the second drive motor switched off and in the third position both drive motors are switched on. This has the advantage that the user can switch on both drive motors in simple manner and without loading the domestic supply too much, wherein sufficient power is generated to arrange channels in a hard surface. In order to arrange channels in a less hard surface it can then suffice to use the second position in which only one of the two drive motors is switched on, which reduces wear of the device and is moreover energy-saving. The control circuit can likewise be embodied as a two-position switch wherein the above stated second and third position are switched fully automatically, for instance by making use of a preprogrammed microcontroller.

In a further preferred embodiment of the invention the starting power supply switching means are arranged between the control means and the first drive motor. This has the advantage that in most cases it is possible to suffice with starting power supply switching means for only one drive motor, which saves space and cost.

In a further embodiment of the invention the starting power supply switching means comprise first adjusting means for preadjusting the first power supply value and second adjusting means for preadjusting the second power supply value. In a further embodiment of the present invention the starting power supply switching means comprise time interval adjusting means for preadjusting the time interval between adjustment of the power supply to the first and to the second power supply value. The use of first adjusting means, second adjusting means and the time interval adjusting means make it possible in simple manner to realize an optimum switch-on of the device subject to the available energy supply infrastructure and the drive motors used.

According to a further embodiment of the invention the first and second drive motor are connected in series.

According to a further embodiment of the invention the first drive motor can be connected to the grinding means via a drive belt. The use of drive belts has among its advantages that the drive motors remain intact if the grinding discs become blocked.

In a further embodiment of the invention depth-adjustment means are provided for adjusting the depth of the channels to be arranged by the grinding means, wherein the depth-adjustment means can preferably be operated on the top side of the device. The depth-adjustment means preferably comprise an arm part which is fixed on one side to a pivoting part of the frame on which the grinding means are arranged and which on the other side extends to the top of the device. This has the advantage that the user can vary the depth of the channel for grinding in simple manner and without having to bend or having to carry out other potentially hazardous actions.

In a further embodiment of the invention the power supply of the first and second drive motor by the energy supply infrastructure is formed by the domestic power supply. This has the advantage that for energy supply use can be made of the power supply already present in a home or office without the necessity of having to make special provisions, for instance in the form of an electrical generator.

In a further embodiment the control means are provided with bridge circuits for bridging the starting power supply switching means so as to enable minimizing of losses and maximizing of the power transmitted to the surface.

Further preferred embodiments are characterized by the remaining sub-claims, in particular driving of the transport means arranged on the frame, in addition to the collection of grinding dust created by the grinding means.

Further advantages, features and details of the present invention will become apparent from the following description of a preferred embodiment thereof wherein reference is made to the annexed drawings, in which:
- figure 1 shows a view in perspective of a preferred embodiment of the method according to the present invention;
- figure 2 shows a view mainly in cross-section along the line II-II in figure 1;

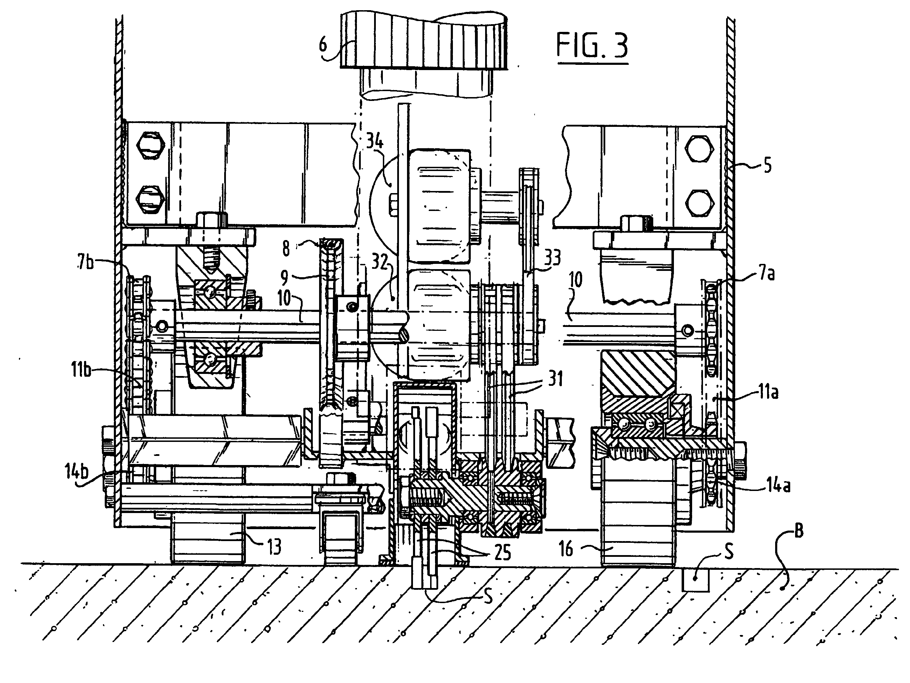

- figure 3 shows a view mainly in cross-section along the line III-III;
- figure 4 is a schematic view of a preferred embodiment of the control circuit and the starting power supply switching means;
- figure 5 shows a curve of the voltage supplied by the starting power supply switching means as a function of time;
- figure 6 shows an alternative embodiment of the suction part; and
- figure 7 shows a further embodiment of the suction part.

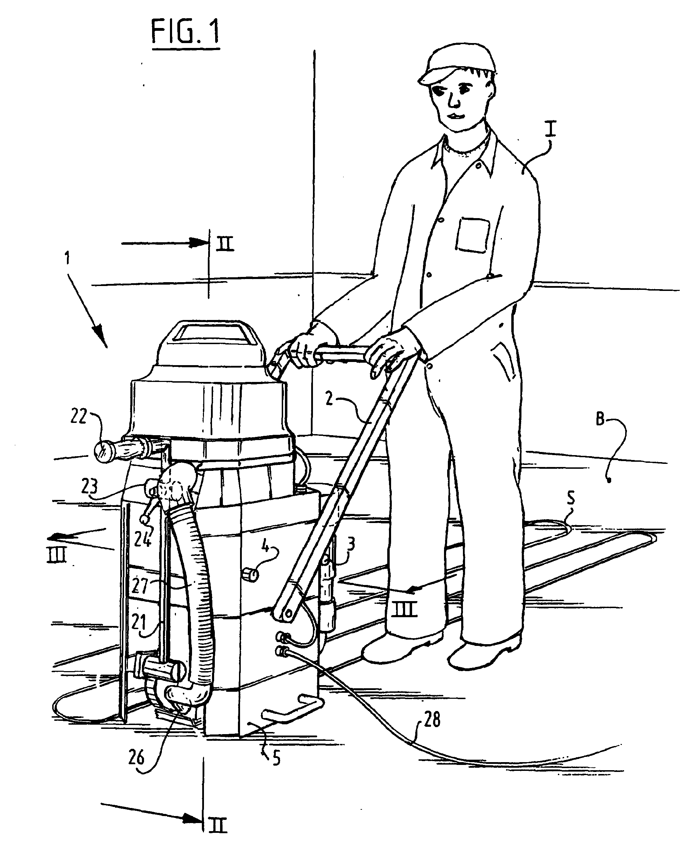

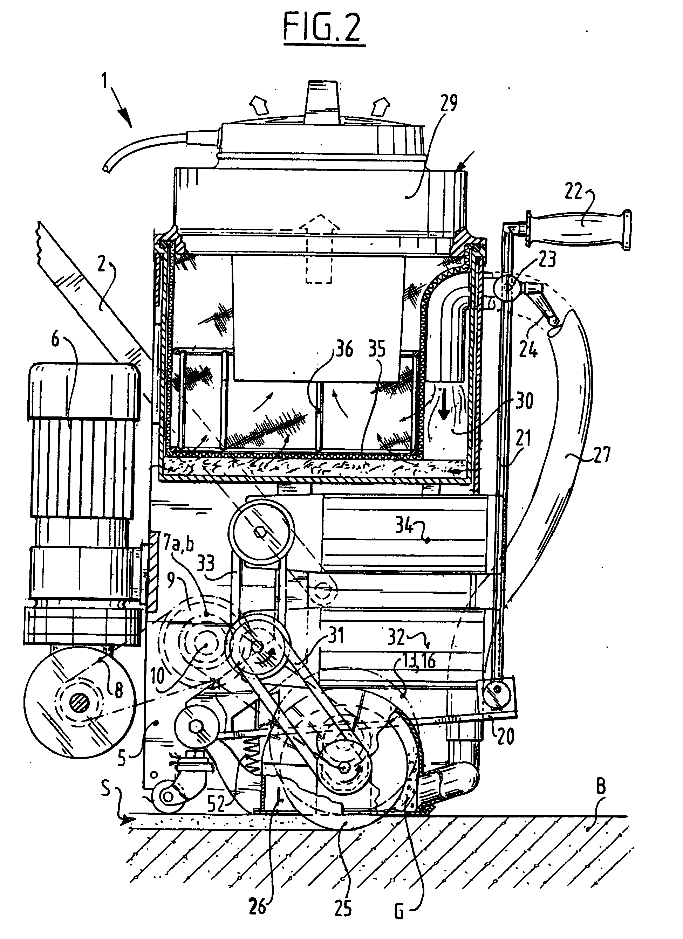

For the purpose of laying heating pipes a number of channels S are arranged in a floor B of a home or office space by an operative I who operates a grinding machine 1 (figure 1). Operative I walks behind the driven grinding machine 1 and provides steering thereof using a bracket or steering handle 2 which is pivotable between stops 3 and 4 mounted on frame 5 of grinding machine 1, so that grinding machine 1 can be controlled in both the shown rearward position of bracket 2 and in a forward position (not shown) of bracket 2. Grinding machine 1 is powered via a power cable 28 by the electrical mains supply present in the house or the office. Grinding machine 1 is moved forward by a transport drive motor 6 (figure 2) which drives a drive shaft 10 rotatably via a toothed wheel, a chain 8 and a rotating pulley 9. On the outer ends of drive shaft 10 the rotating movement is transmitted via toothed wheels 7a and 7b, drive chains 11a and 11b onto toothed wheels 14a and 14b which are fixedly connected to respective drive wheels 13 and 16. Toothed wheels 7a and 7b and/or 14a and 14b are provided with blocking bearings (not shown). The blocking bearings block drive wheels 13 and 16 in one direction of rotation. It is hereby possible when transport drive motor 6 is switched off to cause the device to negotiate a bend in simple manner by steering with steering handle 2, whereby a curved channel S can be made in the surface B.

Provided on the underside of grinding machine 2 for arranging a channel are one or more grinding discs 25 which are driven by a first drive motor 32 via two drive belts 31, wherein a second drive motor 34 connected in series to the first motor 32 via a drive belt 33 also drives the first drive motor 32.

As an alternative to the coupling of the two drive motors 32 and 34 by means of drive belts a gearbox can be provided. This is advantageous since less power loss occurs when the two motors are coupled. The transmission of drive motors 32 and 34 to the grinding discs remains separated in this case using one or more drive belts so that the above stated advantage in respect of jamming of the grinding discs is preserved.

In the case of blocking of the grinding discs, the operative I can operate a switch (not shown) which interrupts the rotation of the drive wheels.

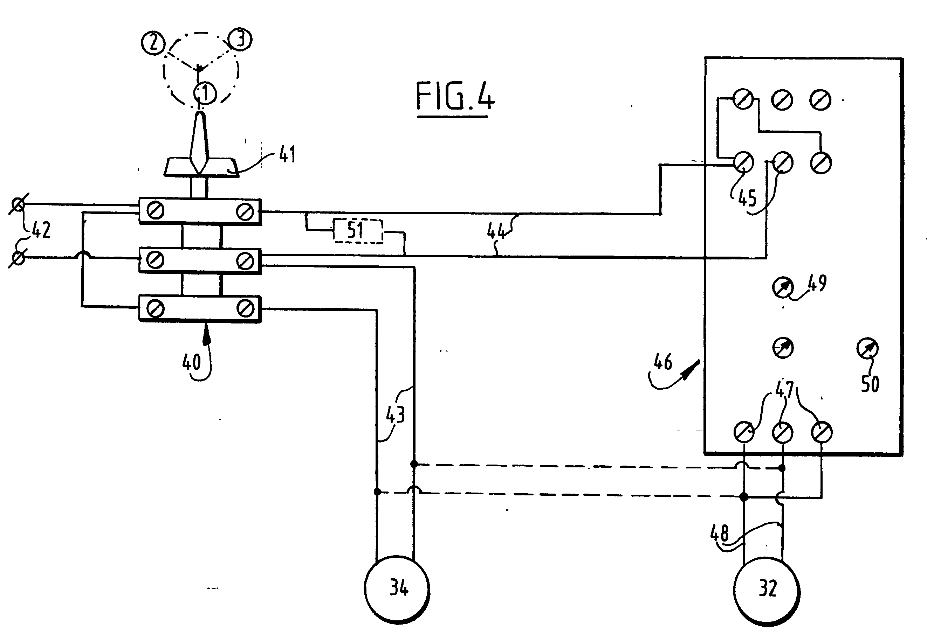

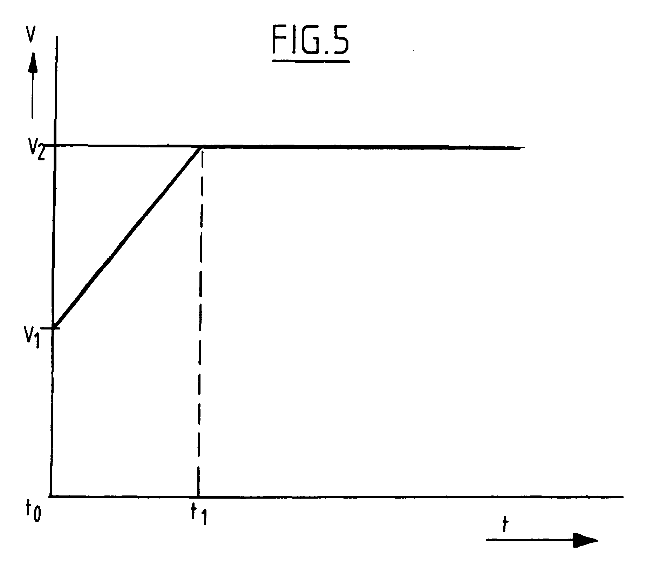

Switch-on of the first drive motor 32 and/or second drive motor 34 takes place using switch 40 (figure 4). This switch 40 has three positions which can be selected with control handle 41. In the first position (1) there is no conductive connection between supply terminal 42, to which is connected a supply voltage of about 220 V, and the two drive motors 32 and 34. In the second position (2) of control handle 41 electrical conduction is brought about via connecting cable 44 between supply terminals 42 and terminals 45 of a starting power supply switching means or "soft starter" 46. Soft starter 46 is connected via terminals 47 and connecting cables 48 to the lower drive motor 32 of grinding machine 1. The operation of soft starter 45 is elucidated with reference to the graph of figure 5, in which the voltage V supplied to terminals 47 is plotted against the time t. At a point in time T₀ control handle 41 of switch 40 is moved from the first to the second position, whereby terminals 47 of soft starter 46 generate a voltage of V₁. The voltage on terminals 47 then becomes gradually greater until at the point in time T₁ a maximum voltage value V₂ is reached which corresponds for instance with the voltage value of 220 V usual in a domestic power supply. Thus is brought about that the current peaks resulting from switching on the lower drive motor 32 remain limited. When the domestic power supply is used the peak current caused by switching on one of the two drive motors can be limited to a maximum of 15 A and preferably to a maximum of 10 A, this still being just sufficient to prevent the fuses of the power supply burning through or other damage being caused to the domestic power supply.

In the third position (3) a conductive connection is made between supply terminals 42 and the upper drive motor 34 via supply terminals 42 and connecting wires 43, so that this motor is also switched on.

The starting time T₁-T₀ of soft starter 46 can be adjusted using trimming potentiometer 49, while the starting power V₀ of soft starter 46 can be adjusted using trimming potentiometer 50. By varying the settings of the starting time and the starting power subject to the type of drive motor and the alternating voltage supplied by the domestic power supply an optimal levelling-out of the peak currents can be ensured for any situation with a sufficient degree of user convenience.

In another embodiment of the invention switch 40 can be provided with a bridge circuit (not shown) which in the third position (3) of switch 40 provides a direct conductive connection between switch 40 and the lower drive motor 32. Soft starter 46 is hereby bridged, which has the effect that no loss of power occurs via soft starter 46 and the lower drive motor 32 can therefore provide maximum power.

A variator (not shown) is provided to vary the power of transport drive motor 6. The variator is operated manually by an operative I and automatically regulates the rotation speed of transport drive motor 6 and therefore the speed at which the machine is driven.

In a further embodiment (not shown) the variator is replaced by a frequency control W. The frequency control varies the speed of movement of the machine depending on the load on the grinding discs and therefore depending on the hardness of the surface B. This takes place by measuring the amperage of drive motors 32, 34 and processing the measured values such that the frequency control accordingly adjusts the rotation speed of transport drive motor 6. In the case of hard floors the resistance encountered by the grinding discs will be great, so that drive motors 32, 34 need a great deal of force to overcome this resistance, implying a high amperage of drive motors 32, 34. After measurement of this high amperage the frequency control is actuated (by for instance a microprocessor), which frequency control will in turn control transport drive motor 6 and in this case reduce the rotation speed thereof. The transport speed of the machine will hereby be reduced. As a consequence the resistance on the grinding discs decreases again, and therefore also the amperage of drive motors 32, 34. The amperage is therefore adjusted continuously in indirect manner, for instance to 15 A, thereby ensuring optimal operation of the machine.

Grinding discs 25 are preferably rotatably mounted on a pivotable plate part 20 which forms part of frame 5 of grinding machine 1 and which is pivotable relative thereto by displacing the arm 21 mounted on plate part 20 in upward and downward direction using handle 22. Such a displacement of handle 22 displaces grinding discs 25 in corresponding manner, whereby the grinding depth can be varied. A constant grinding depth is ensured by operating a clamp 22 of the height adjustment which fixes arm 21 relative to frame 5 of grinding machine 1 by means of a pinch fitting operable with control arm 24. Because handle 22 is situated on the top part of grinding machine 1 the operative I can set the grinding depth of grinding disc 25 and does not have to bend therein, which could not only cause the operative I back strain but could also result in injury hazard.

The grinding dust G produced by grinding discs 25 is drawn by a suction device 29 via mouthpiece 26 and a flexible hose 27 into a collecting space 30. Mouthpiece 26 is pivotable relative to frame 5 on an imaginary axis which lies in line with the pivot axis of plate part 20. Hereby, and because mouthpiece 26 is pressed as much as possible against the surface B by a spring 52 and the flexible hose 27, mouthpiece 26 is moved substantially closely over the surface B at all times and at any grinding depth setting. This has the result that a good suction of the grinding dust or chippings G is provided.

The above mentioned collecting space 30 is provided with dust filter 35 onto which is placed a framework 36, for instance of metal, wherein the grinding dust or chippings G move due to its own weight under dust filter 35 on the underside of suction device 29. Framework 36 is displaced upward as the quantity of chippings G in collecting space 30 increases.

A further preferred embodiment of the suction device is described in figure 5. Vacuum cleaner 60 is placed on a collecting bin 64. Underpressure is created in collecting bin 64 via a suction nozzle 61, whereby chippings G are supplied via hose 27. The chippings G are first of all filtered using a pre-filter 63. The remaining chippings G, i.e. the chippings which have passed through pre-filter 63, are then filtered by a fine-mesh post-filter 62. This prevents the suction device becoming blocked, while a good filtering action is nevertheless effected by the double filter technique.

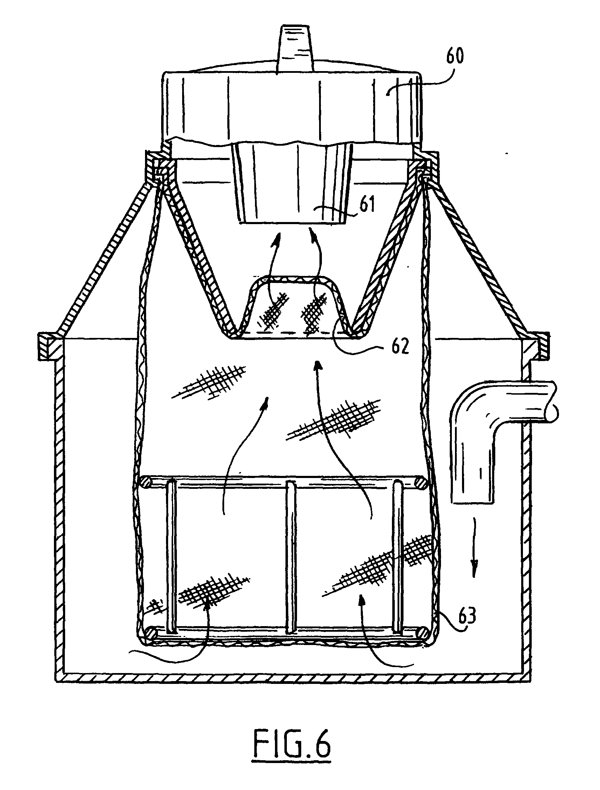

In the embodiment shown in figure 6 air is pre-filtered by means of a filter 63 of cloth or fabric, whereafter it is post-filtered in a second filter 62 which is provided for instance with a teflon layer and/or with Goretex®, whereafter the indrawn air is discharged via suction nozzle 61 by the suction member arranged in suction part 60 in a manner not shown. The double filtering prevents the dust particles entering the environment or the motor part.

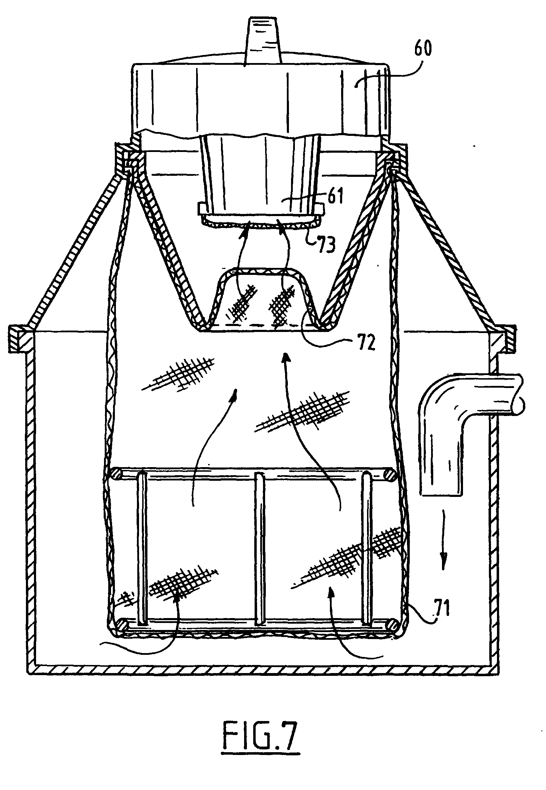

In the embodiment of the invention shown in figure 7 air is filtered by means of a pre-filter 71, a fine filter 72 and a motor filter 73. Motor filter 73 serves to protect the vacuum cleaner motor and contributes toward a cleaner blow-out air, which is advantageous for operative I.

The present invention is not limited to the described preferred embodiment thereof; the rights sought are defined by the following claims.

## Claims

1. Device (1) for arranging one or more channels in floors, for instance for the purpose of arranging floor heating, wherein the device comprises:
- a frame (5),
- transport means (6) arranged on the frame (5) for transporting the device,
- grinding means (25) arranged on the frame for grinding the channels,
- drive means (31-34) connectable to a power supply for driving the grinding means,
- control circuits (40,46) for controlling the drive means, **characterized in that** the drive means comprise a first and second drive motor (32,34) and the control circuit is adapted such that it switches on the first drive motor (32) at a first point in time and the second drive motor (34) at a second point in time.

2. Device as claimed in claim 1, wherein the first and second drive motor are arranged one above the other.

3. Device as claimed in claim 1 or 2, comprising starting power supply switching means for adjusting the power supply of the first and/or second drive motor (32,34) from a first power supply value to a second power supply value, wherein the second power supply value is greater than the first power supply value.

4. Device as claimed in claim 1, 2 or 3, wherein the control circuit comprises a three-position switch (40), wherein in a first position both drive motors are switched off, in a second position the first drive motor (32) is switched on and the second drive motor (34) switched off and in a third position both drive motors (32,34) are switched on.

5. Device as claimed in claim 3 or 4, wherein starting power supply switching means are arranged between the control means and the first drive motor (32).

6. Device as claimed in claim 3 or 5, wherein the starting power supply switching means comprise first adjusting means (50) for preadjusting the first power supply value.

7. Device as claimed in claim 3 or 5, wherein the starting power supply switching means comprise second adjusting means for preadjusting the second power supply values.

8. Device as claimed in claim 3 or 5, wherein the starting power supply switching means comprise time interval adjusting means (49) for preadjusting the time interval between adjustment of the power supply to the first and to the second power supply value.

9. Device as claimed in any of the foregoing claims, provided with a variator for manually varying the transporting speed of the device.

10. Device as claimed in any of the claims 1-9, provided with a frequency control (W) for adapting the transporting speed subject to the hardness of the surface.

11. Device as claimed in any of the foregoing claims, wherein the first and second drive motor (32,34) are connected in series.

12. Device as claimed in claim 11, wherein the first drive motor (32,34) can be connected to the grinding means (25) via a first drive belt.

13. Device as claimed in any of the foregoing claims, comprising depth-adjustment means (20,22) for adjusting the depth of the channel to be arranged by the grinding means.

14. Device as claimed in claim 13, wherein the depth-adjustment means can be operated on the top side of the device.

15. Device as claimed in claim 14, wherein the depth-adjustment means comprise an arm part (21) which is fixed on one side to a pivoting part (20) of the frame and which on the other side extends to the top of the device.

16. Device as claimed in any of the foregoing claims, wherein the power supply of the first and second drive motor (32,34) is supplied from the domestic power supply.

17. Device as claimed in claim 3, wherein the control means are provided with a bridge circuit for bridging the starting power supply switching means.

18. Device as claimed in any of the foregoing claims, also provided with suction means (29) which serve to collect the grinding dust (G) created by the grinding means (25) and which are arranged on the frame.

19. Device as claimed in claim 18, wherein the suction means (29) comprise a mouthpiece (26) which pivots over an imaginary axis substantially corresponding with the imaginary axis on which the grinding means pivot.

20. Device as claimed in any of the foregoing claims, which comprises a suction device provided with at least two filters (62,63), wherein the filters have different filtering properties.

21. Method of arranging one or more channels in a relatively hard floor, wherein a driven device as defined in claims 18-20 is steered over the floor and wherein the domestic power supply is used as power supply.

## Patentansprüche

1. Vorrichtung (1) zum Ausbilden eines oder mehrerer Kanäle in Böden, z.B. zum Anordnen einer Bodenheizung, wobei die Vorrichtung aufweist:
einen Rahmen (5);
eine auf dem Rahmen (5) angeordnete Transporteinrichtung (6) zum Transportieren der Vorrichtung;
eine auf dem Rahmen angeordnete Schleifeinrichtung (25) zum Schleifen der Kanäle;
eine mit einer Versorgungsspannung verbindbare Antriebseinrichtung (31 - 34) zum Antreiben der Schleifeinrichtung; und
Steuerschaltungen (40, 46) zum Steuern der Antriebseinrichtung;
**dadurch gekennzeichnet, dass**
die Antriebseinrichtung einen ersten und einen zweiten Antriebsmotor (32, 34) aufweist; und
die Steuerschaltung dazu geeignet ist, den ersten Antriebsmotor (32) zu einem ersten Zeitpunkt und den zweiten Antriebsmotor (34) zu einem zweiten Zeitpunkt einzuschalten.

2. Vorrichtung nach Anspruch 1, wobei der erste und der zweite Antriebsmotor übereinander angeordnet sind.

3. Vorrichtung nach Anspruch 1 oder 2, mit einer Startversorgungsspannungsschalteinrichtung zum Einstellen der Versorgungsspannung des ersten und/oder des zweiten Antriebsmotors (32, 34) von einem ersten Versorgungsspannungswert auf einen zweiten Versorgungsspannungswert, wobei der zweite Versorgungsspannungswert größer ist als der erste Versorgungsspannungswert.

4. Vorrichtung nach Anspruch 1, 2 oder 3, wobei die Steuerschaltung einen Dreistellungsschalter (40) aufweist, wobei in einer ersten Stellung beide Antriebsmotoren ausgeschaltet sind, in einer zweiten Stellung der erste Antriebsmotor (32) eingeschaltet und der zweite Antriebsmotor (34) ausgeschaltet ist und in einer dritten Stellung beide Antriebsmotoren (32, 34) eingeschaltet sind.

5. Vorrichtung nach Anspruch 3 oder 4, wobei die Startversorgungsspannungsschalteinrichtung zwischen der Steuereinrichtung und dem ersten Antriebsmotor (32) angeordnet ist.

6. Vorrichtung nach Anspruch 3 oder 5, wobei die Startversorgungsspannungsschalteinrichtung eine erste Einstelleinrichtung (50) zum Voreinstellen des ersten Versorgungsspannungswertes aufweist.

7. Vorrichtung nach Anspruch 3 oder 5, wobei die Startversorgungsspannungsschalteinrichtung eine zweite Einstelleinrichtung zum Voreinstellen des zweiten Versorgungsspannungswertes aufweist.

8. Vorrichtung nach Anspruch 3 oder 5, wobei die Startversorgungsspannungsschalteinrichtung eine Zeitintervalleinstelleinrichtung (49) zum Voreinstellen des Zeitintervalls zwischen dem Zeitpunkt, zu dem die Versorgungsspannung auf den ersten Versorgungsspannungswert eingestellt wird, und dem Zeitpunkt, zu dem die Versorgungsspannung auf den zweiten Versorgungsspannungswert eingestellt wird, aufweist.

9. Vorrichtung nach einem der vorangehenden Ansprüche, mit einer Regeleinrichtung zum manuellen Ändern der Transportgeschwindigkeit der Vorrichtung.

10. Vorrichtung nach einem der Ansprüche 1 bis 9, mit einer Frequenzsteuerung (W) zum Anpassen der Transportgeschwindigkeit in Abhängigkeit von der Härte der Oberfläche.

11. Vorrichtung nach einem der vorangehenden Ansprüche, wobei der erste und der zweite Antriebsmotor (32, 34) in Serie verbunden sind.

12. Vorrichtung nach Anspruch 11, wobei der erste und der zweite Antriebsmotor (32, 34) durch einen ersten Antriebsriemen mit der Schleifeinrichtung (25) verbindbar ist.

13. Vorrichtung nach einem der vorangehenden Ansprüche, mit einer Tiefeneinstellungseinrichtung (20, 22) zum Einstellen der Tiefe des durch die Schleifeinrichtung auszubildenden Kanals.

14. Vorrichtung nach Anspruch 13, wobei die Tiefeneinstellungseinrichtung auf der Oberseite der Vorrichtung betätigbar ist.

15. Vorrichtung nach Anspruch 14, wobei die Tiefeneinstellungseinrichtung einen Armabschnitt (21) aufweist, der an einer Seite an einem Schwenkabschnitt (20) des Rahmens befestigt ist und sich an der anderen Seite zur Oberseite der Vorrichtung erstreckt.

16. Vorrichtung nach einem der vorangehenden Ansprüche, wobei die Versorgungsspannung für den ersten und den zweiten Antriebsmotor (32, 34) von einer Netzspannungsversorgung zugeführt wird.

17. Vorrichtung nach Anspruch 3, wobei die Steuereinrichtung eine Brückenschaltung zum Überbrücken der Startversorgungsspannungsschalteinrichtung aufweist.

18. Vorrichtung nach einem der vorangehenden Ansprüche, ferner mit einer auf dem Rahmen angeordneten Saugeinrichtung (29), die dazu dient, durch die Schleifeinrichtung (25) erzeugten Schleifstaub (G) zu sammeln.

19. Vorrichtung nach Anspruch 18, wobei die Saugeinrichtung (29) ein Mündungsstück (26) aufweist, das um eine gedachte Achse schwenkbar ist, die im Wesentlichen der gedachten Achse entspricht, um die die Schleifeinrichtung schwenkbar ist.

20. Vorrichtung nach einem der vorangehenden Ansprüche, mit einer Saugeinrichtung, die mindestens zwei Filter (62, 63) aufweist, wobei die Filter verschiedene Filtereigenschaften haben.

21. Verfahren zum Ausbilden eines oder mehrerer Kanäle in einem relativ harten Fußboden, wobei eine angetriebene Vorrichtung nach einem der Ansprüche 18 bis 20 über den Boden geführt wird, und wobei eine Netzspannung als Versorgungsspannung verwendet wird.

## Revendications

1. Dispositif (1) destiné à agencer une ou plusieurs gorges dans des sols, par exemple dans le but d'agencer un chauffage par le sol, dans lequel le dispositif comprend :
- un cadre (5),
- des moyens de transport (6) agencés sur le cadre (5) pour transporter le dispositif,
- des moyens abrasifs (25) agencés sur le cadre pour réaliser les gorges par abrasion,
- des moyens d'entraînement (31 à 34) connectables à une alimentation électrique pour entraîner les moyens abrasifs,
- des circuits de commande (40, 46) pour commander les moyens d'entraînement, **caractérisé en ce que** les moyens d'entraînement comprennent des premier et second moteurs d'entraînement (32, 34) et le circuit de commande est adapté de sorte qu'il allume le premier moteur d'entraînement (32) à un premier instant et le second moteur d'entraînement (34) à un second instant.

2. Dispositif selon la revendication 1, dans lequel les premier et seconde moteurs d'entraînement sont agencés l'un au-dessus de l'autre.

3. Dispositif selon la revendication 1 ou 2, comprenant des moyens de commutation d'alimentation électrique de démarrage pour régler l'alimentation électrique du premier moteur d'entraînement et/ou du second moteur d'entraînement (32, 34) d'une première valeur d'alimentation électrique à une seconde valeur d'alimentation électrique, dans lequel la seconde valeur d'alimentation électrique est supérieure à la première valeur d'alimentation électrique.

4. Dispositif selon la revendication 1, 2 ou 3, dans lequel le circuit de commande comprend un commutateur à trois positions (40), dans lequel dans une première position les deux moteurs d'entraînement sont éteints, dans une deuxième position le premier moteur d'entraînement (32) est allumé et le second moteur d'entraînement (34) éteint, et dans une troisième position les deux moteurs d'entraînement (32, 34) sont allumés.

5. Dispositif selon la revendication 3 ou 4, dans lequel les moyens de commutation d'alimentation électrique de démarrage sont agencés entre les moyens de commande et le premier moteur d'entraînement (32).

6. Dispositif selon la revendication 3 ou 5, dans lequel les moyens de commutation d'alimentation électrique de démarrage comprennent des premiers moyens de réglage (50) pour prérégler la première valeur d'alimentation électrique.

7. Dispositif selon la revendication 3 ou 5, dans lequel les moyens de commutation d'alimentation électrique de démarrage comprennent des seconds moyens de réglage pour prérégler la seconde valeur d'alimentation électrique.

8. Dispositif selon la revendication 3 ou 5, dans lequel les moyens de commutation d'alimentation électrique de démarrage comprennent des moyens de réglage d'intervalle temporel (49) pour prérégler l'intervalle temporel entre le réglage de l'alimentation électrique à la première valeur d'alimentation électrique et à la seconde valeur d'alimentation électrique.

9. Dispositif selon une quelconque des revendications précédentes, pourvu d'un variateur pour varier manuellement la vitesse de transport du dispositif.

10. Dispositif selon une quelconque des revendications 1 à 9, pourvu d'une commande de fréquence (W) pour adapter la vitesse de transport en fonction de la dureté de la surface.

11. Dispositif selon une quelconque des revendications précédentes, dans lequel les premier et second moteurs d'entraînement (32, 34) sont connectés en série.

12. Dispositif selon la revendication 11, dans lequel le premier moteur d'entraînement (32, 34) peut être connecté aux moyens abrasifs (25) par l'intermédiaire d'une première courroie d'entraînement.

13. Dispositif selon une quelconque des revendications précédentes, comprenant des moyens de réglage de profondeur (20, 22) pour régler la profondeur de la gorge destinée à être agencée par les moyens abrasifs.

14. Dispositif selon la revendication 13, dans lequel les moyens de réglage de profondeur peuvent être actionnés sur le côté supérieur du dispositif.

15. Dispositif selon la revendication 14, dans lequel les moyens de réglage de profondeur comprennent une partie de bras (21) qui est fixée, sur un côté, à une partie de pivotement (20) du cadre et qui, sur l'autre côté, s'étend jusqu'à la partie supérieure du dispositif.

16. Dispositif selon une quelconque des revendications précédentes, dans lequel l'alimentation électrique des premier et second moteurs d'entraînement (32, 34) est fournie à partir de l'alimentation électrique domestique.

17. Dispositif selon la revendication 3, dans lequel les moyens de commande sont pourvus d'un circuit à pont pour réaliser un pont sur les moyens de commutation d'alimentation électrique de démarrage.

18. Dispositif selon une quelconque des revendications précédentes, également pourvu de moyens aspirants (29) qui servent à recueillir la poussière d'abrasion (G) créée par les moyens abrasifs (25) et qui sont agencés sur le cadre.

19. Dispositif selon la revendication 18, dans lequel les moyens aspirants (29) comprennent une embouchure (26) qui pivote sur un axe imaginaire correspondant sensiblement à l'axe imaginaire sur lequel les moyens abrasifs pivotent.

20. Dispositif selon une quelconque des revendications précédentes, qui comprend un dispositif aspirant pourvu d'au moins deux filtres (62, 63), dans lequel les filtres possèdent des propriétés différentes.

21. Procédé d'agencement d'une ou de plusieurs gorges dans un sol relativement dur, dans lequel un dispositif entraîné selon les revendications 18 à 20 est orienté sur le sol et dans lequel l'alimentation électrique domestique est utilisée en tant qu'alimentation électrique.
